# EUROPEAN PATENT APPLICATION

(11) **EP 3 232 314 A1**
(43) Date of publication of application: **18.10.2017**
(21) Application number: 16194080.4
(22) Date of filing: 17.10.2016
(51) Int. Cl.: G06F 3/0488, G06F 3/0482

(54) **METHOD AND DEVICE FOR PROCESSING AN OPERATION**

(30) Priority: 13.04.2016 CN 201610228004
(71) Applicant: Beijing Xiaomi Mobile Software Co., Ltd., Beijing 100085 (CN)
(72) Inventor: WANG, Shuo, Beijing, Beijing 100085 (CN); JIANG, Dongya, Beijing, Beijing 100085 (CN); WANG, Guangjian, Beijing, Beijing 100085 (CN)
(74) Representative: Sackin, Robert

(57) **Abstract**

The present disclosure relates to a method and device for processing an operation, and belongs to the field of terminals. The method includes: displaying (101, 201) on a terminal interface a graphical representation including a slidable region and a response region, wherein the response region includes a plurality of response segments, and each response segment corresponds to a different function; if a sliding operation on the slidable region is detected, acquiring (102, 202) a position of an end point of the sliding operation on the response region; determining (103, 204) a target function according to the position of the end point, wherein the target function is a function corresponding to a response segment in which the position of the end point is; and enabling (104, 205) the target function.

## Description

### TECHNICAL FIELD

The present disclosure generally relates to the field of terminals, and more particularly, to a method and device for processing an operation.

### BACKGROUND

With the development of terminal technologies, terminals having a touch screen are used more and more widely, which enables operation processes of the terminals to be increasingly simple, and the manner for inputting instructions by the terminals to be increasingly diversified. For example, corresponding operations can be performed by detecting users' single-touch, multi-touch and sliding operation, and the like.

In related arts, a method for processing an operation may be as follows: when a user needs to switch a current desktop wallpaper, a terminal displays a system setting interface by detecting a trigger operation for a system setting option by the user, if a trigger operation for a wallpaper setting option on the system setting interface is detected, the terminal displays a wallpaper setting interface. The wallpaper setting interface at least includes a plurality of wallpapers, and if a selection operation for any wallpaper is detected, the selected wallpaper is set as a desktop wallpaper.

### SUMMARY

In order to address problems in related arts, the present disclosure provides a method and device for processing an operation.

According to a first aspect of embodiments of the present disclosure, there is provided a method for processing an operation, including:
displaying on a terminal interface a graphical representation including a slidable region and a response region, wherein the response region includes a plurality of response segments, and each response segment corresponds to a different function;
if a sliding operation on the slidable region is detected, acquiring a position of an end point of the sliding operation on the response region;
determining a target function according to the position of the end point, wherein the target function is a function corresponding to a response segment in which the position of the end point is; and
enabling the target function.

In a first possible implementation of the first aspect of the present disclosure, before determining the target function according to the position of the end point, the method further includes:
if the sliding operation on the slidable region is detected, acquiring a sliding duration which is a time period for sliding from the slidable region to the response region;
determining whether the sliding duration is less than a preset duration;
if the sliding duration is less than the preset duration, performing the determination of the target function according to the position of the end point; and
if the sliding duration is greater than or equal to the preset duration, not responding to the sliding operation.
In a second possible implementation of the first aspect of the present disclosure, the determining the target function according to the position of the end point includes:
if the position of the end point is in a first response segment, determining the target function as a screenshot function; or,
if the position of the end point is in a second response segment, determining the target function as a lock screen function.

In a third possible implementation of the first aspect of the present disclosure, a center of the slidable region is coincident with a center of the response region.

In a fourth possible implementation of the first aspect of the present disclosure, the slidable region has a circular shape, and the response region has an annular shape surrounding the slidable region.

In a fifth possible implementation of the first aspect of the present disclosure, there is a preset distance between the slidable region and the response region.

According to a second aspect of embodiments of the present disclosure, there is provided a device for processing an operation, including:
a graphical representation display module configured to display on a terminal interface a graphical representation including a slidable region and a response region, wherein the response region includes a plurality of response segments, and each response segment corresponds to a different function;
a position acquisition module configured to, if a sliding operation on the slidable region is detected, acquire a position of an end point of the sliding operation on the response region;
a target function determination module configured to determine a target function according to the position of the end point, wherein the target function is a function corresponding to a response segment in which the position of the end point is; and
a target function enable module configured to enable the target function.

In a first possible implementation of the second aspect of the present disclosure, the device further includes:
a sliding duration acquisition module configured to, if the sliding operation on the slidable region is detected, acquire a sliding duration which is a time period for sliding from the slidable region to the response region;
a determination module configured to determine whether the sliding duration is less than a preset duration;
the target function determination module is further configured to, if the sliding duration is less than the preset duration, perform the determination of the target function according to the position of the end point; and
a processing module configured to, if the sliding duration is greater than or equal to the preset duration, not respond to the sliding operation.

In a second possible implementation of the second aspect of the present disclosure, the target function determination module is configured to:
if the position of the end point is in a first response segment, determine the target function as a screenshot function; or,
if the position of the end point is in a second response segment, determine the target function as a lock screen function.

In a third possible implementation of the second aspect of the present disclosure, a center of the slidable region is coincident with a center of the response region.

In a fourth possible implementation of the second aspect of the present disclosure, the slidable region has a circular shape, and the response region has an annular shape surrounding the slidable region.

In a fifth possible implementation of the second aspect of the present disclosure, there is a preset distance between the slidable region and the response region.

According to a third aspect of embodiments of the present disclosure, there is provided a device for processing an operation, including:
a processor; and
a memory for storing instructions executable by the processor;
wherein the processor is configured to:
display on a terminal interface a graphical representation including a slidable region and a response region, wherein the response region includes a plurality of response segments, and each response segment corresponds to a different function;
if a sliding operation on the slidable region is detected, acquire a position of an end point of the sliding operation on the response region;
determine a target function according to the position of the end point, wherein the target function is a function corresponding to a response segment in which the position of the end point is; and
enable the target function.

According to a fourth aspect of embodiments of the present disclosure, there is provided a computer program, which when executing on a processor of a device, performs a method according to any one of the above methods according to a first aspect of embodiments of the present disclosure.

Technical solutions provided by embodiments of the present disclosure may include the following advantageous effects.

In the present disclosure, the graphical representation is displayed on the terminal interface; if the sliding operation on the slidable region is detected, the position of the end point of the sliding operation on the response region is acquired; the target function is determined according to the position of the end point, and the target function is enabled so as to complete corresponding operations. In this way, when a user needs to perform an operation, he/she can slide the slidable region to the response region of the graphical representation to perform the operation. Thus, operation steps can be simplified, operation speed can be accelerated, and operation efficiency can be improved. Particularly, when the user uses one hand to hold the terminal, greater conveniences can be provided to the user by using above method for processing an operation.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for processing an operation according to an exemplary embodiment.
Fig. 2A is a flow chart of a method for processing an operation according to an exemplary embodiment.
Fig. 2B is a schematic diagram showing four kinds of graphical representations according to an exemplary embodiment.
Fig. 2C is a schematic diagram of a terminal interface display according to an exemplary embodiment.
Fig. 3 is a block diagram of a device for processing an operation according to an exemplary embodiment.
Fig. 4 is a block diagram of a device 400 for processing an operation according to an exemplary embodiment.

### DETAILED DESCRIPTION

The objects, technical solutions and advantages of the present disclosure will be more apparent from the following detailed description to implementations of the present disclosure taken in conjunction with the accompanying drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

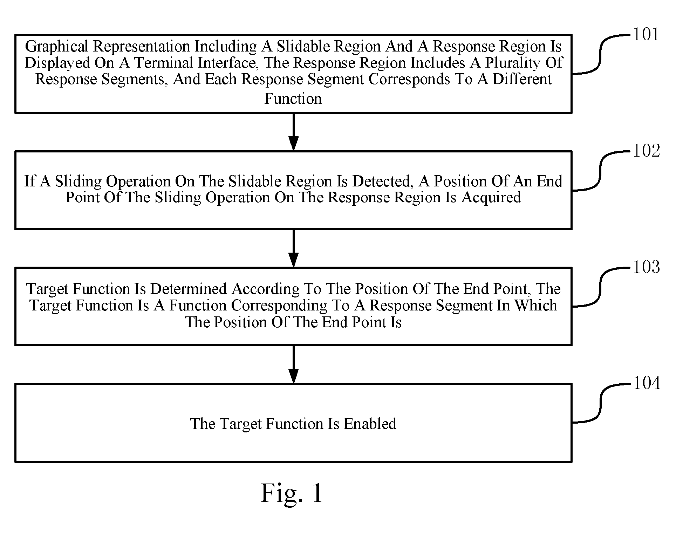

Fig. 1 is a flow chart of a method for processing an operation according to an exemplary embodiment. As shown in Fig. 1, the method for processing an operation can be applied in a terminal, and can include the following steps.

In step 101, a graphical (floating) representation including a slidable region and a response region is displayed on a terminal interface. The response region includes a plurality of response segments, and each response segment corresponds to a different function.

In step 102, if a sliding operation on the slidable region is detected, a position of an end point of the sliding operation on the response region is acquired.

In step 103, a target function is determined according to the position of the end point. The target function is a function corresponding to a response segment in which the position of the end point is.

In step 104, the target function is enabled.

In the method provided by embodiments of the present disclosure, the graphical representation is displayed on the terminal interface; if the sliding operation on the slidable region is detected, the position of the end point of the sliding operation on the response region is acquired; the target function is determined according to the position of the end point, and the target function is enabled so as to complete corresponding operations. In this way, when a user needs to perform an operation, he/she can slide the slidable region to the response region of the graphical representation to perform the operation. Thus, operation steps can be simplified, operation speed can be accelerated, and operation efficiency can be improved. Particularly, when the user uses one hand to hold the terminal, greater conveniences can be provided to the user by using above method for processing an operation.

In a first possible implementation of the present disclosure, before determining the target function according to the position of the end point, the method further includes:
if the sliding operation on the slidable region is detected, acquiring a sliding duration which is a time period for sliding from the slidable region to the response region;
determining whether the sliding duration is less than a preset duration;
if the sliding duration is less than the preset duration, performing the determination of the target function according to the position of the end point; and
if the sliding duration is greater than or equal to the preset duration, not responding to the sliding operation.

In a second possible implementation of the present disclosure, the determining the target function according to the position of the end point includes:
if the position of the end point is in a first response segment, determining the target function as a screenshot function; or,
if the position of the end point is in a second response segment, determining the target function as a lock screen function.

In a third possible implementation of the present disclosure, a center of the slidable region is coincident with a center of the response region.

In a fourth possible implementation of the present disclosure, the slidable region has a circular shape, and the response region has an annular shape surrounding the slidable region.

In a fifth possible implementation of the present disclosure, there is a preset distance between the slidable region and the response region.

In all of above optional technical solutions, any combination can be used to form exemplary embodiments of the present disclosure, which will not be elaborated herein.

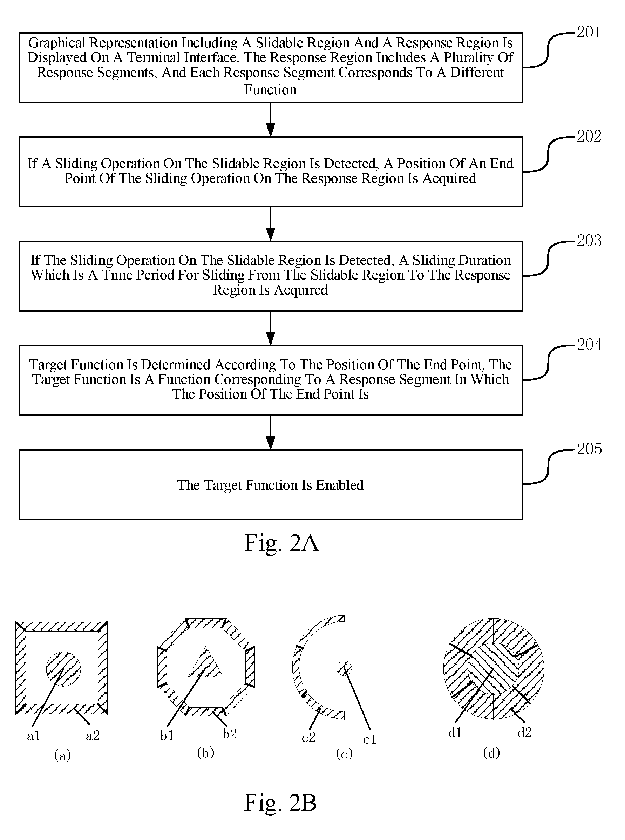

Fig. 2A is a flow chart of a method for processing an operation according to an exemplary embodiment. The method of the present embodiment can be performed by a terminal. Referring to Fig. 2A, the present embodiment can include the following steps.

In step 201, a graphical representation including a slidable region and a response region is displayed on a terminal interface. The response region includes a plurality of response segments, and each response segment corresponds to a different function.

For example, if an unlock operation on the terminal is detected, the graphical representation is displayed on a system interface while the system interface is displayed, the graphical representation is used to realize shortcut operations for some functions on the terminal by the user. It should be noted that the graphical representation can be fixedly displayed on any fixed position on the terminal interface, or if a sliding operation on a sensing region of the graphical representation by the user is detected, the graphical representation can also be moved to a corresponding position on the terminal interface according to the sliding operation.

The slidable region and the response region included in the graphical representation can be of different shapes. Fig. 2B shows shapes of four possiblegraphical representations. For example, in Fig. 2B(a), a slidable region a1 has a circular shape, and a response region a2 has a "dual rectangular" shape; in Fig. 2B(b), a slidable region b1 has a triangular shape, and a response region b2 is a regular octagon frame; in Fig. 2B(c), a slidable region c1 has a circular shape, and a response region c2 has a semi-annular shape; in Fig. 2B(d), a slidable region d1 has a circular shape, and a response region d2 has an annular shape. In fact, the slidable region and the response region can also be other shapes, and the embodiment of the present disclosure does not impose specific limitations on this.

The number of response segments included in the response region can be a default value set by a system, or can also be set according to users' needs. For example, Particularly, how to segment and which response segment corresponds to which function can be set by the user. Or, system default settings can be used, and the embodiment of the present disclosure does not impose specific limitations on this.

In another embodiment of the present disclosure, the response region can be divided into a different number of response segments according to different shapes of the response region. For example, in Fig. 2B(a), the response region can be divided into four response segments, each frame of "dual rectangular" shape corresponds to one response segment, that is, a region between two adjacent separators in Fig. 2B(a) corresponds to one response segment; in Fig. 2B(b), the response region can be divided into eight response segments, each frame of the regular octagon frame corresponds to one response segment, that is, a region between two adjacent separators in Fig. 2B(b) corresponds to one response segment; in Fig. 2B(c), the response region can be divided into three response segments, an arc between two adjacent separators in Fig. 2B(c) corresponds to one response segment; in Fig. 2B(d), the response region can be divided into six response segments, an arc between two adjacent separators in Fig. 2B(d) corresponds to one response segment. It should be noted that areas of individuals of the plurality of response segments can be the same or different, and the embodiment of the present disclosure does not impose specific limitations on this.

Rather, the response region with different shapes can also correspond to the same number of response segments, and the embodiment of the present disclosure does not impose specific limitations on this.

There is a preset distance between the slidable region and the response region, which enables corresponding operation to be performed by the terminal according to a specific position sliding from the slidable region to the response region. The preset distance can be set to any fixed value, or a specific value of the preset distance can be selected from a plurality of alternate values previously stored in the terminal system according to user needs, or the preset distance can also be determined by other methods, the embodiment of the present disclosure does not limit to this.

It should be noted that the preset distance can also be zero, that is, there is no interval between the slidable region and the response region. As shown in Fig. 2B(d), the response region is outside of the slidable region.

In another embodiment of the present disclosure, a center of the slidable region is coincident with a center of the response region, in order to ensure that when the slidable region is slid to any position on the response region, all the straight-line distances sliding from the slidable region to the response region are the same. In addition, an aesthetic property of the graphical representation can also be ensured.

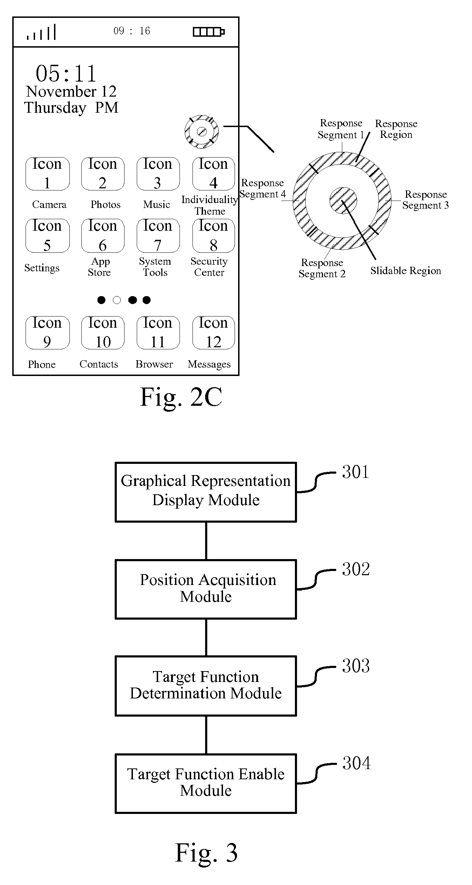

In a further embodiment of the present disclosure, the slidable region has a circular shape, and the response region has an annular shape surrounding the slidable region. As shown in Fig. 2C, in the graphical representation of Fig. 2C, a central circular shadow region is the slidable region of the graphical representation, and an outer annular shadow region is the response region of the graphical representation.

In step 202, if a sliding operation on the slidable region is detected, a position of an end point of the sliding operation on the response region is acquired.

The sliding operation refers to a process from a user touching upon (or contacting) the terminal interface to leaving the terminal interface, that is, one sliding operation can be seen as a process starting with user's touch upon the slidable region on the terminal interface and ending with detection of user's leaving from the slidable region.

The method for acquiring the position of the end point of the sliding operation on the response region may be as follows: if the sliding operation on the slidable region is detected, coordinates of the position of the end point at which the user leaves the terminal interface are acquired, and the coordinates of the position of the end point are acquired as the position of the end point of the sliding operation on the response region.

In step 203, if the sliding operation on the slidable region is detected, a sliding duration which is a time period for sliding from the slidable region to the response region is acquired.

If the sliding operation on the slidable region is detected, the method for acquiring the sliding duration may be as follows: if the sliding operation on the slidable region is detected, a start time when the user touches the terminal interface and an end time when the user leaves the terminal interface are acquired, and the sliding duration is acquired according to the start time and the end time. Rather, the sliding duration can also be acquired by using other methods, and the embodiment of the present disclosure does not impose specific limitations on this.

If the sliding operation on the slidable region is detected, after the sliding duration is acquired, whether the sliding duration is less than a preset duration is determined; if the sliding duration is less than the preset duration, step 204 is performed; and if the sliding duration is greater than or equal to the preset duration, the sliding operation is not responded, that is, the process is ended.

The preset duration can be determined according to an interval distance between the slidable region and the response region. Particularly, if a plurality of optional preset distances are stored in the terminal system, a preset duration can be determined for each preset distance, according to the plurality of preset distances. For example, if the preset distance is 0.5cm, the preset duration is 500ms. Or, the preset duration can be determined as any other time period. Or, the preset duration can also be determined according to other methods, and the embodiment of the present disclosure does not impose specific limitations on this.

In another embodiment of the present disclosure, if the sliding operation on the slidable region is detected, a sliding speed of the sliding operation can also be detected. The sliding speed refers to a sliding speed corresponding to a process sliding from a start position of the slidable region to the response region. The sliding speed can refer to an average speed sliding from the slidable region to the response region, and can also refer to the maximum speed sliding from the slidable region to the response region, and the embodiment of the present disclosure does not impose specific limitations on this.

The method for acquiring the sliding speed may be as follows: coordinates of a position of a start point at which the user touches the terminal interface and coordinates of a position of an end point at which the user leaves the terminal interface, and a start time when the user touches the terminal interface and an end time when the user leaves the terminal interface are acquired, and the sliding speed of the sliding operation is acquired according to the coordinates of the position of the start point, the coordinates of the position of the end point, the start time and the end time.

Correspondingly, if the sliding operation on the slidable region is detected, after the sliding duration is acquired, whether the sliding speed is greater than a preset speed is determined; if the sliding speed is greater than the preset speed, step 204 is performed; and if the sliding speed is less than or equal to the preset speed, the sliding operation is not responded, that is, the process is ended.

The method for determining the preset speed is the same as above method for determining the preset duration, which will not be elaborated herein.

The sliding duration or the sliding speed of the sliding operation is acquired, and whether step 204 is performed can be determined according to whether the sliding duration is less than the preset duration, or whether the sliding speed is greater than the preset speed. Thus, the accuracy of the operation can be improved, and thereby inconvenience to users caused by incorrect operation can be avoided.

It should be noted that, in the method for processing an operation provided by the present disclosure, step 203 can be performed, or can be not performed, and the embodiment of the present disclosure does not impose specific limitations on this.

In step 204, a target function is determined according to the position of the end point. The target function is a function corresponding to a response segment in which the position of the end point is.

The determining of the target function according to the position of the end point includes: if the position of the end point is in a first response segment, the target function is determined as a screenshot function; or, if the position of the end point is in a second response segment, the target function is determined as a lock screen function. The first response segment can be any response segment, and the second response segment can be any one of other response segments in addition to the first response segment. For example, in Fig. 2C, the first response segment is a response segment 1, and the second response segment is a response segment 2; if it is detected that the slidable region slides from the start position to any position on the response segment 1 and finally stays in the response segment 1, the target function is determined as the screenshot function; and if it is detected that the slidable region slides from the start position to any position on the response segment 2 and finally stays in the response segment 2, the target function is determined as the lock screen function.

Rather, the position of the end point can also be other positions, such as a response segment 3, a response segment 4, and the like in Fig. 2C. The target function can also be other functions, such as a recording function, a desktop wallpaper setting function, a music play function, and the like, and the embodiment of the present disclosure does not impose specific limitations on this.

Different functions corresponding to different response segments can be set by the system by default, or can also be set by the user according to use habits. Particularly, the method for setting different functions to different response segments by the user may be as follows: if a trigger operation for setting options on the response segments is detected, the number of optional response segments is displayed, if a selection operation for any number of response segments by the user is detected, the selected number of response segments is determined as the number of response segments after the response region is divided, and a preview of candidate response segments is performed; if a selected operation for any one of candidate response segments in the preview by the user is detected, the candidate response segment is determined as a response segment to be set at present; if a trigger operation for a function bar is detected, a plurality of candidate functions are displayed; and if a selection operation for any function of the plurality of candidate functions by the user is detected, the function is determined as a function corresponding to the response segment. In addition, in the function bar, an addition option can also be displayed, so that the user can add functions to be set by the user by performing the trigger operation for the addition option.

In another embodiment of the present disclosure, a matching relationship between the set response segments and the functions is stored in a specified storage space, so that if the sliding operation on the slidable region is detected, the target function can be determined according to the position of the end point of the sliding operation and the corresponding relationship between the response segments and the functions stored in the specified storage space.

In step 205, the target function is enabled.

After the target function is determined according to the position of the end point, a corresponding target function is enabled to complete corresponding operations. For example, if the target function is the screenshot function, a screen capture function is enabled to capture a screen of the current terminal, and then the captured image is stored in a photo album; and if the target function is the lock screen function, the lock screen function is enabled to perform a lock screen processing on the terminal.

In the method provided by embodiments of the present disclosure, the graphical representation is displayed on the terminal interface; if the sliding operation on the slidable region is detected, the position of the end point of the sliding operation on the response region is acquired; the target function is determined according to the position of the end point, and the target function is enabled so as to complete corresponding operations. In this way, when a user needs to perform an operation, he/she can slide the slidable region to the response region of the graphical representation to perform the operation. Thus, operation steps can be simplified, operation speed can be accelerated, and operation efficiency can be improved. Particularly, when the user uses one hand to hold the terminal, greater conveniences can be provided to the user by using above method for processing an operation. Further, the sliding duration is acquired, and it is determined whether the sliding operation is responded according to whether the sliding duration is less than the preset duration, thus, the accuracy of operations can be further improved, and thereby incorrect operations can be avoided.

Fig. 3 is a block diagram of a device for processing an operation according to an exemplary embodiment. Referring to Fig. 3, the device includes a graphical representation display module 301, a position acquisition module 302, a target function determination module 303 and a target function enable module 304.

The graphical representation display module 301 is configured to display on a terminal interface a graphical representation including a slidable region and a response region. The response region includes a plurality of response segments, and each response segment corresponds to a different function.

The position acquisition module 302 is configured to, if a sliding operation on the slidable region is detected, acquire a position of an end point of the sliding operation on the response region.

The target function determination module 303 is configured to determine a target function according to the position of the end point. The target function is a function corresponding to a response segment in which the position of the end point is.

The target function enable module 304 is configured to enable the target function.

In a first possible implementation provided by the present disclosure, the device further includes: a sliding duration acquisition module, a determination module, the target function determination module 303 and a processing module.

The sliding duration acquisition module is configured to, if the sliding operation on the slidable region is detected, acquire a sliding duration which is a time period for sliding from the slidable region to the response region.

The determination module is configured to determine whether the sliding duration is less than a preset duration.

The target function determination module 303 is further configured to, if the sliding duration is less than the preset duration, perform the determination of the target function according to the position of the end point.

The processing module is configured to, if the sliding duration is greater than or equal to the preset duration, not respond to the sliding operation.

In a second possible implementation provided by the present disclosure, the target function determination module 303 is configured to:
if the position of the end point is in a first response segment, determine the target function as a screenshot function; or,
if the position of the end point is in a second response segment, determine the target function as a lock screen function.

In a third possible implementation provided by the present disclosure, a center of the slidable region is coincident with a center of the response region.

In a fourth possible implementation provided by the present disclosure, the slidable region has a circular shape, and the response region has an annular shape surrounding the slidable region.

In a fifth possible implementation provided by the present disclosure, there is a preset distance between the slidable region and the response region.

With respect to the devices in the above embodiments, the specific manners for performing operations for individual modules therein have been described in detail in the embodiments regarding the methods, which will not be elaborated herein.

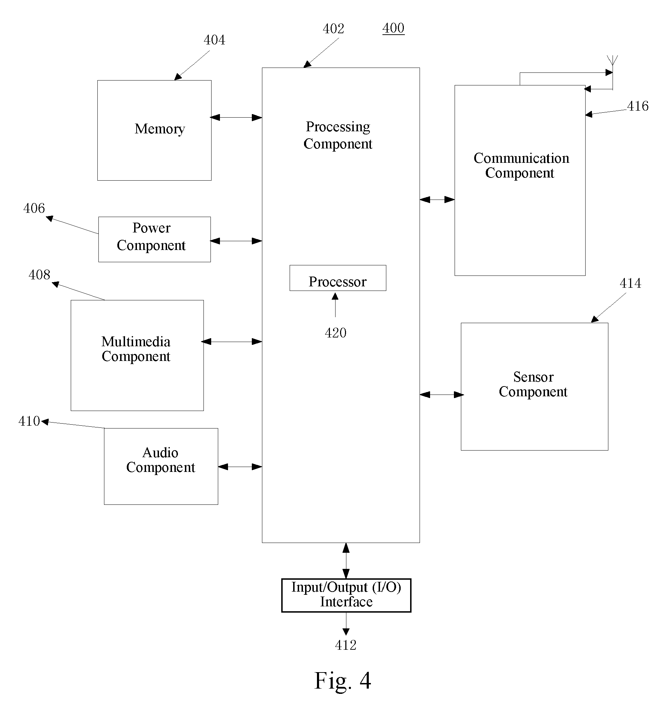

Fig. 4 is a block diagram of a device 400 for processing an operation according to an exemplary embodiment. For example, the device 400 may be a mobile phone, a computer, a digital broadcast terminal, a messaging device, a gaming console, a tablet, a medical device, exercise equipment, a personal digital assistant, and the like.

Referring to Fig. 4, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 404 including instructions executable by the processor 420 in the device 400, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a mobile terminal, causes the mobile terminal to perform above method for processing an operation.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for processing an operation, comprising:
displaying (101, 201) on a terminal interface a graphical representation comprising a slidable region and a response region, wherein the response region comprises a plurality of response segments, and each response segment corresponds to a different function;
if a sliding operation on the slidable region is detected, acquiring (102, 202) a position of an end point of the sliding operation on the response region;
determining (103, 204) a target function according to the position of the end point, wherein the target function is a function corresponding to a response segment in which the position of the end point is; and
enabling (104, 205) the target function.

2. The method of claim 1, before determining (103, 204) the target function according to the position of the end point, the method further comprises:
if the sliding operation on the slidable region is detected, acquiring (203) a sliding duration which is a time period for sliding from the slidable region to the response region;
determining whether the sliding duration is less than a preset duration;
if the sliding duration is less than the preset duration, performing the determination of the target function according to the position of the end point; and
if the sliding duration is greater than or equal to the preset duration, not responding to the sliding operation.

3. The method of claim 1 or claim 2, wherein the determining (103, 204) the target function according to the position of the end point comprises:
if the position of the end point is in a first response segment, determining the target function as a screenshot function; or,
if the position of the end point is in a second response segment, determining the target function as a lock screen function.

4. The method of any preceding claim, wherein a center of the slidable region is coincident with a center of the response region.

5. The method of any preceding claim, wherein the slidable region has a circular shape, and the response region has an annular shape surrounding the slidable region.

6. The method of any preceding claim, wherein there is a preset distance between the slidable region and the response region.

7. A device for processing an operation, comprising:
a graphical representation display module (301) configured to display on a terminal interface a graphical representation comprising a slidable region and a response region, wherein the response region comprises a plurality of response segments, and each response segment corresponds to a different function;
a position acquisition module (302) configured to, if a sliding operation on the slidable region is detected, acquire a position of an end point of the sliding operation on the response region;
a target function determination module (303) configured to determine a target function according to the position of the end point, wherein the target function is a function corresponding to a response segment in which the position of the end point is; and
a target function enable module (304) configured to enable the target function.

8. The device of claim 7, wherein the device further comprises:
a sliding duration acquisition module configured to, if the sliding operation on the slidable region is detected, acquire a sliding duration which is a time period for sliding from the slidable region to the response region;
a determination module configured to determine whether the sliding duration is less than a preset duration;
the target function determination module is further configured to, if the sliding duration is less than the preset duration, perform the determination of the target function according to the position of the end point; and
a processing module configured to, if the sliding duration is greater than or equal to the preset duration, not respond to the sliding operation.

9. The device of claim 7 or claim 8, wherein the target function determination module is configured to:
if the position of the end point is in a first response segment, determine the target function as a screenshot function; or,
if the position of the end point is in a second response segment, determine the target function as a lock screen function.

10. The device of any of claims 7 to 9, wherein a center of the slidable region is coincident with a center of the response region.

11. The device of any of claims 7 to 10, wherein the slidable region has a circular shape, and the response region has an annular shape surrounding the slidable region.

12. The device of any of claims 7 to 11, wherein there is a preset distance between the slidable region and the response region.

13. A device for processing an operation, comprising:
a processor (420); and
a memory (404) for storing instructions executable by the processor (420);
wherein the processor (420) is configured to:
display (101, 201) on a terminal interface a graphical representation comprising a slidable region and a response region, wherein the response region comprises a plurality of response segments, and each response segment corresponds to a different function;
if a sliding operation on the slidable region is detected, acquire (102, 202) a position of an end point of the sliding operation on the response region;
determine (103, 204) a target function according to the position of the end point, wherein the target function is a function corresponding to a response segment in which the position of the end point is; and
enable (104, 205) the target function.

14. A computer program, which when executing on a processor (420) of a device for processing an operation, performs a method according to any of claims 1-6.
